# EUROPÄISCHE PATENTSCHRIFT

(11) **EP 0 810 604 B1**
(45) Veröffentlichungstag und Bekanntmachung des Hinweises auf die Patenterteilung: **31.03.2004**
(21) Anmeldenummer: 97108095.7
(22) Anmeldetag: 20.05.1997
(51) Int. Cl.: G11B 27/32, H04N 5/92

(54) **Verfahren zur Informationsaufzeichnung auf der Steuerspur eines Speicherträgers**
Method for recording information on the control track of a storage medium
Procédé d'enregistrement d'information sur la piste de contrôle d'un support de mémorisation

(30) Priorität: 31.05.1996 DE 19621829
(43) Veröffentlichungstag der Anmeldung: 03.12.1997
(73) Patentinhaber: DEUTSCHE THOMSON-BRANDT GMBH, 78048 Villingen-Schwenningen (DE)
(72) Erfinder: Marzluf, Axel, 78052 Villingen-Schwenningen (DE); Link, Hermann, 78166 Donaueschingen (DE)
(74) Vertreter: Wördemann, Hermes, Dipl.-Ing.

(56) Entgegenhaltungen:
- DE-A- 3 735 539
- DE-A- 4 434 034
- US-A- 5 018 027

## Beschreibung

Die vorliegende Erfindung betrifft ein Verfahren zum Aufzeichnen von Information auf der Steuerspur eines Speicherträgers, insbesondere von zusätzlicher Information auf der Steuerspur (CTL-Spur) eines Videobandes, wie es in einem Videorekorder verwendet wird.

Videobänder, wie beispielsweise solche nach dem VHS-Standard, enthalten mindestens eine Steuer- oder CTL-Spur, auf der Steuer- und Triggerinformationen geschrieben werden, die von dem Gerät für entsprechende Steuerzwecke verwendet werden. Um die CTL-Spur auch zum Schreiben von anderen Informationen nutzen zu können, ist ein CTL-Codierverfahren definiert, worin über die Änderung des Tastverhältnisses der aufgezeichneten Steuerpulse eine logische Null "0" und eine logische Eins "1" definiert werden, indem für logisch Null "0" ein Puls-Pausen-Verhältnis von 60 : 40 und für logisch Eins "1" eines von 27.5 : 72.5 festgelegt wird. Über diese Definition wird ein sogenanntes VISS-(Video Index Search System) und VASS- (Video Address Search System) Datenformat festgelegt, wobei einerseits das VISS-Datenformat die folgende Zusammensetzung aufweist: ein Bit Null "0", gefolgt von 61 ± 3 Bit Eins "1", und nachfolgend ein Bit Null "0", und andererseits das VASS- Datenformat aus 4 Headern und drei BCD Datenblöcken besteht. Dabei ist ein BCD-Datenblock 4 Bit lang und ein Header besteht aus 1 Bit Null "0", gefolgt von 9 Bit "1" und einem nachfolgenden Bit Null "0". Bei beiden Datenformaten bildet das erste Bit Null "0" in der Schreibrichtung betrachtet die Referenzposition. VISS wird entsprechend der obigen Definition als Positionsmarkierung (Index) und VASS als Adressenaufzeichnung benutzt. Ferner kann noch das 16:9 Format als Videoinformation auf die CTL-Spur geschrieben werden.

Nachteilig bei den obigen bekannten Verfahren ist deren begrenzte Einsatzmöglichkeit, d.h. es ist damit nicht möglich zusätzliche Informationen wie Bandzählwerte, Filmtitel oder dergleichen auf der CTL-Spur aufzuzeichnen.

Aus der DE 44 34 034 A ist es bekannt, ausgewählte Abschnitte aufgezeichneter Informationen oder Programmblöcke jeweils durch eine Anfangs- und eine Endmarke auf der CTL-Spur zu markieren. Durch Auswertung derartiger Markierungen lassen sich Steuersignale erzeugen, um durch gezieltes Einschalten des schnellen Vorlaufes bei der Wiedergabe z.B. Werbeeinblendungen überspringen oder um ausgewählte Szenen lückenlos auf einen anderen Videorecorder überspielen zu können.

Es ist daher die Aufgabe der vorliegenden Erfindung ein Verfahren zu entwickeln, mit dem zusätzliche Informationen auf der CTL-Spur aufgezeichnet werden können.

Diese Aufgabe wird durch das Verfahren nach Anspruch 1 gelöst. Vorteilhafte Ausgestaltungen der Erfindung sind Gegenstand der Unteransprüche.

Vorzugsweise werden in dem Verfahren zum Schreiben von Information auf die Steuerspur eines Speicherträgers für ein Bandaufzeichnungsgerät, insbesondere eines Videorekorders, die aufzuzeichnenden Daten X in einen derartigen Code Y konvertiert, der eine eindeutige Detektion der Daten innerhalb der Kontrollspur des Speicherträgers ermöglicht. Im allgemeinen wird die Steuerspur des Speicherträgers, der normalerweise durch ein Magnetband realisiert ist, während des Aufzeichnens mit der Information "0" belegt.

In einer ersten Ausführungsform des erfindungsgemäßen Verfahrens wird die Konversion der Daten X in die Daten Y nach den folgenden Regeln durchgeführt:
a) Begrenzen der Anzahl der aufeinanderfolgenden logischen Nullen "0" und logischen Einsen "1" auf einen maximalen Wert max, wobei
b) der maximale Wert max kleiner sein muß als der irgendeiner möglichen verwendeten Kombination aufeinanderfolgender Nullen "0" oder Einsen"1" in anderen Standards, die zur Markierung der Steuerspur herangezogen werden,
c) Anordnen eines Headers zum Einschalten und eines Headers zum Ausschalten der Datendetektion vor und hinter den codierten Daten.

Dabei werden die Header nach den folgenden Regeln gebildet:
d) der Header zum Einschalten der Datendetektion umfaßt eine Anzahl N von logischen Nullen "0" wobei gilt min N = max +1, gefolgt von einer logischen Eins "1" oder irgendeinem typischen Datenmuster,
e) der Header zum Ausschalten der Datendetektion umfaßt N aufeinanderfolgende logische Nullen "0" oder irgendein typisches Datenmuster oder eine definierte Anzahl von Bits des Datenstroms.

Um die Codierung zu vereinfachen, bzw. zur Vermeidung von überflüssiger Redundanz, ist die logische Eins "1" oder das typische Datenmuster des Headers zum Einschalten des Datenlesens bereits Bestandteil der Codierung des ersten bzw. sich an den Header anschließenden Datenblocks. Mit anderen Worten, die Datenblöcke der codierten Daten beginnen in diesem Fall immer mit einer logischen Eins "1". In dieser Ausführungsform hat codierter Datenblock eine feste Länge Z ≥ N.

Vorzugsweise wird der maximale Wert max aufeinanderfolgender logischer Nullen "0" oder Einsen "1" auf den Wert 3 gesetzt.

In einer zweiten Ausführungsform des erfindungsgemäßen Verfahrens können die Daten des erfindungsgemäßen Verfahrens mindestens einen codierten Datenblock umfassen, wobei vor und nach dem mindestens einen Datenblock ein eindeutig detektierbarer Header gesendet wird, und bei mehreren Datenblöcken diese durch einen Header getrennt werden. Mit anderen Worten, es werden für n Datenblöcke, wobei n eine natürliche Zahl größer Null ist, n+1 Header benotigt. Bei dieser Möglichkeit der Codierung wird die zu codierende Information durch die Länge des Datenblocks zwischen den entsprechenden Headern codiert. Unter Länge wird dabei allgemein die Anzahl der Bits in dem obigen CTL-Codierverfahren verstanden, die zwischen den Headern angeordnet sind, also nicht die verstrichene Zeit zwischen den entsprechenden Headern, da die Zeit von der Bandgeschwindigkeit abhängt und daher kein eindeutiges Maß zum Codieren von Informationen wäre.

In Anbetracht des CTL-Verfahrens wird ein Datenblock vorzugsweise durch eine entsprechende Anzahl logischer Nullen "0" gebildet, wobei, wie oben bereits angemerkt, die Information in der Anzahl der Bits, d.h. Anzahl der logischen Nullen "0", verschlüsselt ist.

Der Header gemäß dem erfindungsgemäßen Verfahren umfaßt ein typisches Bit-Muster mit einer Anzahl logischer Einsen "1"., wobei die Anzahl der logischen Einsen "1" kleiner oder gleich der Anzahl der Headerbits ist. Vorzugsweise besteht der Header aus zwei logischen Einsen " 1 ", d h. dem Muster "11". Andere Muster sind möglich.

Eine dritte Ausführungsform des erfindungsgemäßen Verfahrens, das zur Korrektur des Bandzählers geeignet ist, schreibt eine Triggerinformation an vorbestimmten Zeitintervallen auf die CTL-Spur, wobei die Triggerinformation verschiedene Muster, d.h. im allgemeinen Anzahl von Bits, aufweisen kann, wodurch vorteilhafterweise eine unterschiedliche Bedeutung der verschiedenen Triggerinformationen erreicht wird. Vorzugsweise wird als Triggersignal jeweils am Ende des vorbestimmten Zeitintervalls abwechselnd eine logische Eins "1" bzw. zwei logische Einsen "1" geschrieben. Dabei ist es bei einer Anwendungsform vorteilhaft, daß die logische Eins "1" jeweils bei einer geraden Anzahl von Zeitintervallen, während das Muster zweier logischen Einsen "11" bei einer ungeraden Anzahl von Zeitintervallen geschrieben wird. Als geeignetes Zeitintervall für die Anwendung in einem Videorecorder wird eine Sekunde gewählt, was normalerweise ausreichend ist. Andere Intervallängen sind möglich und hängen von den entsprechenden Anforderungen ab. So wird beispielsweise ein längeres vorbestimmtes Zeitintervall gewählt, wenn der Fehler des Bandzählers hoch ist.

Bevorzugte Ausführungsformen der Erfindung werden-nachfolgend anhand der beigefügten Zeichnungen beschrieben. Dabei zeigt :
Fig. 1 im oberen Teil ein Beispiel einer Konversion für dreistellige Daten und im unteren Teil deren Anordnung im Datenstrom der CTL-Spur,
Fig. 2 ein Beispiel einer Datenaufzeichnung mittels Längencodierung,
Fig. 3 ein Beispiel für die Bandzählerkorrektur durch das Einbringen von zusätzlichen, informationstragenden Triggerpulsen, und
Fig. 4 a-c die Definition der CTL Codierung, sowie die Datenzusammensetzung bei der VISS- und VASS-Datenstruktur.

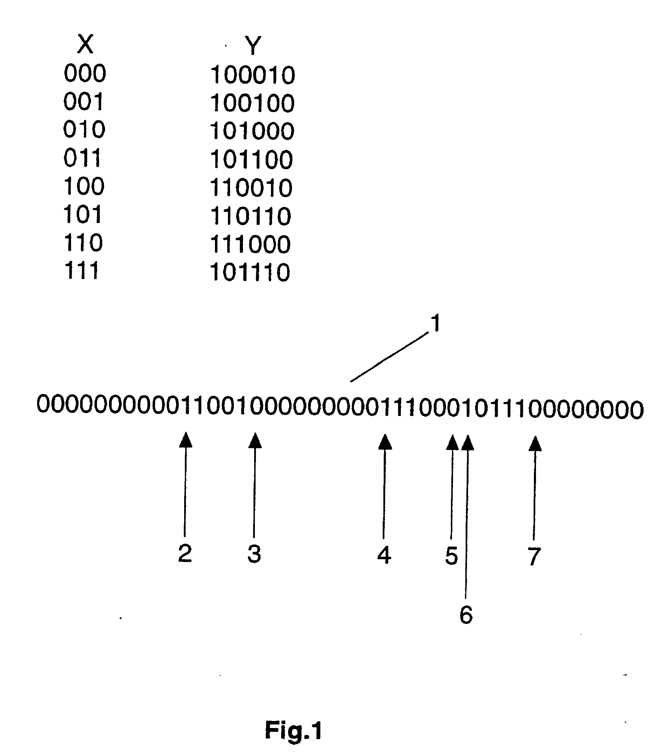

Die Fig. 1 zeigt in ihrem oberen Teil die Konvertierung von Daten X in Daten Y, beispielsweise X = "000" in Y = "100010", unter Verwendung der im allgemeinen Teil bereits aufgeführten Regeln, die hier der Deutlichkeit halber wiederholt werden:
a) Begrenzen der Anzahl der aufeinanderfolgenden logischen Nullen "0" und Einsen "1" auf einen definierten maximalen Wert max, im vorliegenden Fall ist also max = 3;
b) dieser maximale Wert max muß kleiner sein als irgendeine mögliche Kombination anderer Standards, also hier kleiner als 9 logische Einsen "1" entsprechend dem VASS- Header;
c) Einschalten der Datendetektion zur Detektion des ersten Datenbits nach einer Anzahl N (=Detektionswert) logischer Nullen "0", wobei minimum N = max + 1 gilt, und dieser Strom von Nullen von einer logischen Eins "1" oder irgendein anderes typisches Muster gefolgt wird; und
d) Ausschalten der Datendetektion nach dem letzten Bit eines Datenstroms, wenn N aufeinanderfolgende Nullen "0" oder ein typisches Datenmuster oder eine definierte Anzahl von Bits des Datenstroms detektiert wurde.

Ferner wird in dieser Ausführungsform festgelegt, daß ein codierter Datenblock eine feste vorbestimmte Länge Z hat, wobei Z größer als max und im allgemeinen größer oder gleich N sein muß.

Ein weiteres Beispiel für eine Codierung ist in der folgenden Tabelle 1 aufgeführt:

**Tabelle 1**

| X | Y |
|---|---|
| 00 | 1000 |
| 01 | 1010 |
| 10 | 1100 |
| 11 | 1100 |

Der untere Teil der Fig. 1 zeigt einen Datenstrom 1 von CTL-Daten der Datencodierung entsprechend dem oberen Teil der Fig. 1. Dabei ist der Wert von max drei, der Detektionswert beträgt vier, und die Datenblocklänge beträgt sechs Bits. Im Punkt 2 wurden mehr als 4 logische Nullen detektiert, folglich ist das Detektionskriterium erfüllt und die logische Eins "1" im Punkt 2 ist das erste Datenbit des Blocks. Im Punkt 3 ist der Datenblock zu Ende (Z = 6) und es wurde demnach der Block "110010" detektiert, der dem uncodierten Datenwert "100" entspricht. Die Detektion wird abgeschaltet, da nachfolgend 4 logische Nullen "0000"im Datenstrom 1 vorhanden sind. Im Punkt 4 wird die Detektion wieder aktiviert (4 logische Nullen gefolgt von einer logischen Eins). Der erste Datenblock zwischen den Punkten 4 und 5 hat den Wert "111000" entsprechend dem uncodierten Wert "110". Nachfolgend befindet sich der nächste Datenblock zwischen den Punkten 6 und 7 mit dem Inhalt "101110" entsprechend dem uncodierten Wert "111". Nach dem Punkt 7 sind mehr als 4 logische Nullen im Datenstrom 1 vorhanden, so daß die Datendetektion wieder deaktiviert wird. Die Ein- und Ausschaltbedingungen für die Datendetektion könnten auch als Header bezeichnet werden. Dabei wäre der vollständige vordere Header in diesem Beispiel das Muster "00001", wobei die logische "1" zugleich Bestandteil des ersten Datenblocks ist. Der hintere Header zum Abschluß der Datenübertragung wäre hier das Muster "0000".

Ein im Prinzip gleicher Aufbau eines Datenstrom würde sich für eine Datencodierung entsprechend der Tabelle 1 ergeben, wobei der sich ergebende Datenstrom hier nicht dargestellt ist, da er sich aus der Fig. 1 leicht ableiten läßt.

Die Vorteile dieser Ausführungsform liegen darin begründet, daß Datensequenzen dieser Codierung typische VISS- und VASS- Datenmuster ausschließen, also nicht verwenden, so daß allgemeine Daten in der CTL-Spur abgelegt werden können, die eindeutig rekonstruierbar sind und nicht mit den existierenden Standards kollidieren.

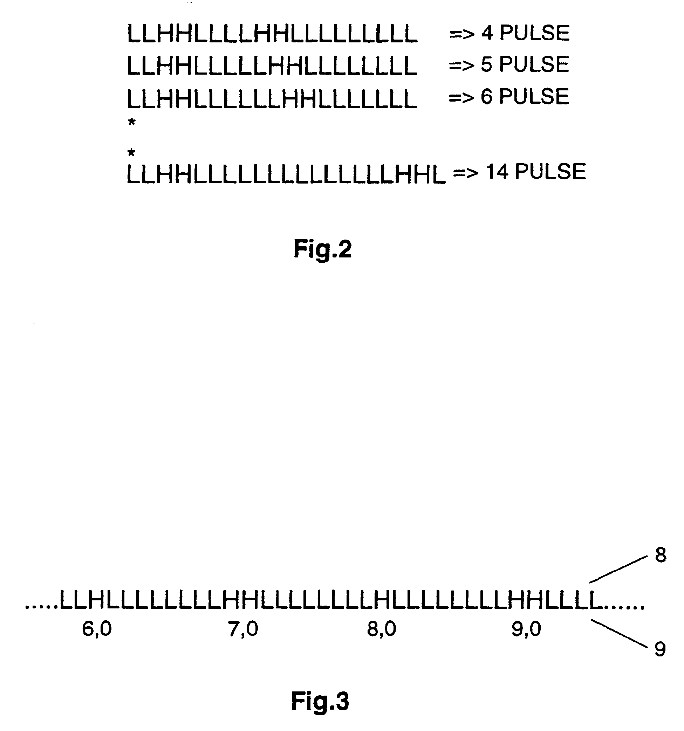

Fig. 2 zeigt eine zweite Ausführungsform der Erfindung, wobei die Information durch die Datenblocklänge der übertragenen CTL-Bits codiert wird. Dargestellt in der Fig. 2 sind verschiedene Ausschnitte von Datenströmen 1. Wesentlich ist dabei die Verwendung von eindeutigen Headern, die vor und nach einem Datenblock angeordnet sind und in diesem Beispiel durch das Muster "11" zweier aufeinanderfolgender logischer Einsen realisiert werden. Andere Headermuster sind denkbar und möglich. Zwischen den entsprechenden Headern sind in den Beispielen der Fig. 2 von oben nach unten 4, 5, 6 und 14 logische Nullen eingeschlossen Diese Lauflängen können nun mit verschiedenen Informationen belegt werden. Beispielsweise könnten die Muster die in der Tabelle 2 aufgeführte Bedeutung haben:

**Tabelle 2**

| | |
|---|---|
| "0000" | 4 Pulse = sync Daten |
| "00000" | 5 Pulse = 0 oder "A" oder Wort wie "der" |
| "000000" | 6 Pulse = 1 oder "B" |
| "00000000000000" | 14 Pulse = 9 oder ein Buchstabe etc. |

Die Vorteile der zweiten Ansführungsform sind darin zu sehen, daß keine Begrenzung hinsichtlich der Länge der Daten oder dergleichen gegeben ist. Weiterhin führt eine Änderung der Bandgeschwindigkeit nicht zu Schwierigkeiten, da die Information in der Anzahl der Bits pro Datenblock liegt und nicht in der zeitlichen Länge des Abstands zwischen den entsprechenden Headern. Wegen der Längencodierung und der identischen Header vor und nach einem Datenblock ist die Laufrichtung des Datenträgers, d.h. des Bandes in der bevorzugten Ausführungsform, ohne Bedeutung. Mit anderen Worten, es ist bei dieser Ausführungsform möglich, die Daten in jeder Laufrichtung des Bandes zu lesen (d.h. während eines Vorwärtsoder Rückwärtslaufs). Eine Kollision mit existierenden Standards wie VISS oder VASS tritt ebensowenig auf, da gegebenenfalls die Anzahl der logischen "0" Pulse erhöht werden kann. Sollten Daten der bekannten Standards detektiert werden, so werden diese Daten aufgrund der Header ignoriert.

Fig. 3 zeigt eine Codierung einer Information, die zur Korrektur des Bandzählers eines Bandgeräts wie eines Videorekorders verwendet werden kann. Falls der Videorekorder den Datenstrom der CTL-Pulse der Steuerspur zum Bandzählen verwendet (sogenanntes lineares Bandzählen), tritt das Problem auf, daß beim Zählen der CTL-Pulse einige dieser Pulse unter Umständen verloren gehen oder falsch gezählt werden. Dies tritt vor allem beim Wechseln der Bandlaufrichtung oder Bandgeschwindigkeit auf Um dieses Falschzählen zu verhindern oder zumindest zu vermindern, werden typische Markierungen oder Triggermarkierungen in vorbestimmten, frei wählbaren Zeitintervallen unter Verwendung der CTL-Definition auf die CTL-Spur geschrieben. Beispielsweise wird in dem Beispiel entsprechend der dritten Ausführungsform alle Sekunde während des Aufzeichnungsmodus eine Markierung auf die CTL-Spur geschrieben. Im vorliegenden Fall wird eine logische Eins "1" an geraden Sekunden und zwei logische Einsen "11" an ungeraden Sekunden geschrieben. Allgemein wird also eine ungerade Anzahl von logischen Einsen, z.B. "1", für eine gerade Anzahl von Zeitintervallen und eine gerade Anzahl von logischen Einsen, z.B. "11", für eine ungerade Anzahl von Zeitintervallen auf die CTL-Spur geschrieben. Zu erkennen ist dies in der Fig. 3, wo im Datenstrom 8 der CTL-Pulse eine logische Eins "1" für ungerade Sekunden und zwei logische Einsen "11" für gerade Sekunden geschrieben stehen (Bezugszeichen 9 bezeichnet den Zählerwert in Sekunden). Diese Information kann zum Triggern des Bandzählers und damit zu dessen Korrektur verwendet werden. Falls beispielsweise der Punkt 7.0 Sekunden in der Fig 3 passiert werden soll und der tatsächliche Zählerwert X liegt zwischen 6.0 und 7.0, so könnte der Bandzähler auf den Wert 6.0 gesetzt werden, da dies der letzte passierte Triggerpunkt war. Falls das Falschzählen des Bandzählers größer als 1 Sekunde ist, kann das Zeitintervall vergrößert werden, beispielsweise auf 2 Sekunden. Dies hängt aber von der Art des verwendeten Videorekorders ab.

Die Vorteile der dritten Ausführungsform liegen darin begründet, daß die Handhabung dieser Informationscodierung sehr einfach ist, was zu einer Robustheit des Verfahrens beiträgt, und das Verfahren unabhängig von vorhandenen Standards ist. Sollte es zu Problemen beispielsweise mit dem VASS Standard kommen, so könnte ein Aktualisieren des Zählers durchgeführt werden, nachdem M Triggerpulse in einer definierten Zeitverzögerung detektiert wurden, wobei M eine natürliche Zahl ist.

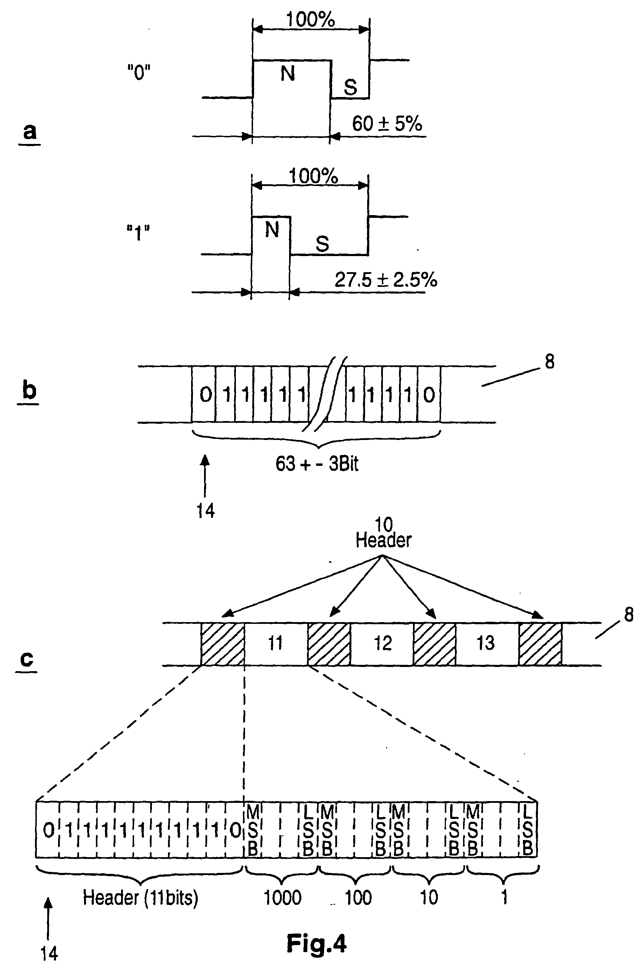

Fig. 4 schließlich zeigt im oberen Teil a) die Definition der logischen Null "0"und der logischen Eins "1" in dem CTL-Standard. Logisch Null "0" wird dabei durch ein Puls-Pausenverhältnis von 60 : 40 und Logisch Eins "1" durch ein solches von 27.5 : 72.5 definiert. Im mittleren Teil b) der Fig. 4 ist die VISS Struktur anhand eines Datenstroms 8 dargestellt, wobei die VISS Markierung mit einem Bit Null "0" beginnt, das gefolgt wird von 61 +/- 3 Bits Eins "1", gefolgt von einem Bit Null "0" als Abschlußbit. Das erste Bit (="0") bildet dabei die Referenzposition 14. Der untere Teil c) der Fig. 4 schließlich zeigt die VASS-Datenstruktur eines Datenstroms 8. Diese Struktur umfaßt vier Header 10, die drei Datenblöcke 11, 12, 13 einrahmen. Ein Header 10 umfaßt 11 Bits mit dem Musters "01111111110", d.h. 9 Einsen "1 ", beiseitig eingerahmt von einer logischen Null "0". Ein Datenblock 11, 12, 13 umfaßt 4 Bit zur freien Verfügung, wobei MSB und LSB definiert sind wie in der Fig. 4c bezeichnet.

## Patentansprüche

1. Verfahren zum Schreiben von Informationen auf eine Steuerspur eines Speicherträgers eines Informationsaufzeichnungsgerätes, insbesondere eines Videorekorders, **dadurch gekennzeichnet, dass** aufzuzeichnende Daten (X) in codierte Daten (Y) konvertiert werden, sodass eine eindeutige Detektion der Daten ermöglicht und insbesondere eine Überschneidung mit einem VISS-(Video Index Search System) oder VASS-(Video Address Search System) Datenmuster zum Beschreiben der Steuerspur vermieden wird, wobei die Konversion der Daten (X) in die codierten Daten (Y) nach den folgenden Regeln verläuft:
a) Begrenzen der Anzahl der aufeinanderfolgenden logischen Nullen "0" und logischen Einsen "1" auf einen maximalen Wert max, wobei
b) der maximale Wert max kleiner sein muss als der irgendeiner möglichen verwendeten Kombination aufeinanderfolgender logischer Nullen "0" oder logischer Einsen "1" in das VISS- oder VASS- Standards, die zur Markierung der Steuerspur herangezogen werden, und
c) Anordnen eines Headers zum Einschalten und eines Headers zum Ausschalten der Datendetektion vor und hinter den codierten Daten (Y).

2. Verfahren nach Anspruch 1, **dadurch gekennzeichnet, dass** die Header nach folgenden Regeln gebildet werden:
a) der Header zum Einschalten der Datendetektion umfasst eine Anzahl N logischer Nullen "0", wobei für die minimale Anzahl N dieser logischer Nullen "0" gilt: min N = maximaler Wert max + 1 gefolgt von einer logischen Eins "1" oder irgendeinem typischen Datenmuster des ersten Datenblocks,
b) der Header zum Ausschalten der Datendetektion umfasst N aufeinanderfolgende logische Nullen "0" oder irgendein typisches Datenmuster oder eine definierte Anzahl von Bits des Datenstroms.

3. Verfahren nach Anspruch 2, **dadurch gekennzeichnet, dass** die codierten Daten (Y) einen Datenblock bilden, der eine Länge Z ≥ N hat.

4. Verfahren nach Anspruch 2, **dadurch gekennzeichnet, dass** die logische Eins "1" oder das typische Muster des ersten Datenblocks des Headers zum Einschalten des Datenlesens Bestandteil der Codierung des darauffolgenden Datenblocks ist.

5. Verfahren nach einem der vorangegangenen Ansprüche, **dadurch gekennzeichnet, dass** vorzugsweise der maximale Wert max = 3 ist.

6. Verfahren nach einem der vorangegangenen Ansprüche, **dadurch gekennzeichnet, dass** das Datenformat der VHS-Spezifikation für VISS- und VASS-Codierung der CTL-Spur entspricht, d.h ein Puls-Pausenverhältnis der CTL-Pulse von 60:40 für logisch Null "0" und ein solches von 27.5: 72.5 für logisch Eins "1".

7. Rekorder, der ein Verfahren nach Anspruch 1 ausführt.

## Claims

1. Method for writing information onto a control track of a storage medium of an information recording machine, in particular of a video recorder, **characterized in that** data (X) to be recorded are converted into coded data (Y), so as to permit unambiguous detection of the data and in particular avoid a clash with a VISS (Video Index Search System) or VASS (Video Address Search System) data pattern for writing to the control track, the conversion of the data (X) into the coded data (Y) proceeding according to the following rules:
a) limitation of the number of successive logic zeros "0" and logic ones "1" to a maximum value max, where
b) the maximum value max must be smaller than that of any possible combination of successive logic zeros "0" or logic ones "1" used in the VISS or VASS standards which are used for marking the control track, and
c) arrangement of a header for switching on and of a header for switching off the data detection before and after the coded data (Y).

2. Method according to Claim 1, **characterized in that** the headers are formed according to the following rules:
a) the header for switching on the data detection comprises a number N of logic zeros "0", where, for the minimum number N of these logic zeros "0" min N = maximum value max +1, followed by a logic one "1" or any typical data pattern of the first data block,
b) the header for switching off the data detection comprises N successive logic zeros "0" or any typical data pattern or a defined number of bits of the data stream.

3. Method according to Claim 2, **characterized in that** the coded data (Y) form a data block which has a length Z ≥ N.

4. Method according to Claim 2, **characterized in that** the logic one "1" or the typical pattern of the first data block of the header for switching on the data reading is a component part of the coding of the succeeding data block.

5. Method according to one of the preceding claims, **characterized in that** the maximum value max is preferably = 3.

6. Method according to one of the preceding claims, **characterized in that** the data format corresponds to the VHS specification for VISS and VASS coding of the CTL track, that is to say a mark-space ratio of the CTL pulses of 60:40 for logic zero "0" and a mark-space ratio of 27.5:72.5 for logic one "1".

7. Recorder which implements a method according to Claim 1.

## Revendications

1. Procédé d'écriture d'informations sur une piste de contrôle d'un support de mémorisation d'un appareil d'enregistrement d'informations, en particulier d'un magnétoscope, **caractérisé en ce que** des données à enregistrer (X) sont converties en données codées (Y), de sorte qu'une détection claire des données soit possible et notamment qu'un recoupement avec un modèle de données VISS (Video Index Search System) ou VASS (Video Address Search System) pour l'écriture de la piste de contrôle soit évité, où la conversion des données (X) en données codées (Y) se déroule selon les règles suivantes :
a) limitation du nombre de zéros "0" logiques successifs et de uns "1" logiques à une valeur maximale max, où
b) la valeur maximale max doit être inférieure à celle de n'importe quelle combinaison possible utilisée de zéros "0" logiques successifs ou de uns "1" dans les normes VISS et VASS utilisées pour le marquage de la piste de contrôle,
c) aménagement d'un en-tête pour la commutation et d'un en-tête pour l'arrêt de la détection de données avant et après les données codées (Y).

2. Procédé selon la revendication 1, **caractérisé en ce que** les en-têtes sont constitués en fonction des règles suivantes :
a) l'en-tête de commutation de la détection de données comprend un nombre N de zéros logiques "0" où le nombre N minimal de ces zéros "0" logiques est égal à : N min = valeur maximale max + 1, suivi d'un un "1" logique ou de n'importe quel modèle de données typique du premier bloc de données,
b) l'en-tête d'arrêt de la détection de données comprend N zéros "0" logiques successifs ou n'importe quel modèle de données typique ou un nombre défini de bits du flux de données.

3. Procédé selon la revendication 2, **caractérisé en ce que** les données codées (Y) constituent un bloc de données d'une longueur Z ≥ N.

4. Procédé selon la revendication 2, **caractérisé en ce que** le un "1" logique ou le modèle typique du premier bloc de données de l'en-tête pour commutation de la lecture de données est une composante du codage du bloc de données suivant.

5. Procédé selon une des revendications précédentes, **caractérisé en ce que** la valeur maximale est de préférence max = 3.

6. Procédé selon une des revendications précédentes, **caractérisé en ce que** le format de données de la spécification VHS pour le codage VISS et VASS correspond à la piste CTL, c'est-à-dire un facteur impulsion-pause des impulsions CTL de 60 / 40 pour le zéro "0" logique et un facteur de type 27,5 / 72,5 pour le un "1" logique.

7. Enregistreur qui exécute un procédé selon la revendication 1.
